# EUROPEAN PATENT SPECIFICATION

(11) **EP 2 605 891 B1**
(45) Date of publication and mention of the grant of the patent: **01.10.2014**
(21) Application number: 10745180.9
(22) Date of filing: 19.08.2010
(51) Int. Cl.: B25J 15/02

(54) **GRIPPER MECHANISM SEGMENT AND GRIPPER MECHANISM**
GREIFMECHANISMUS SEGMENT UND GREIFMECHANISMUS
SEGMENT D'UN MÉCANISME DE PRÉHENSION ET MÉCANISME DE PRÉHENSION

(43) Date of publication of application: 26.06.2013
(73) Proprietor: ABB AG, 68309 Mannheim (DE)
(72) Inventor: STAHL, Thomas, 74937 Spechbach (DE); BREISCH, Sebastian, 69239 Neckarsteinach (DE); VITTOR, Timothy, Easton PA 18045 (US); SOETEBIER, Sven, 68526 Ladenburg (DE)
(86) International application number: PCT/EP2010/005081
(87) International publication number: WO 2012/022360

(56) References cited:
- EP-A1- 0 595 168
- EP-A2- 0 198 501
- US-A- 3 904 234
- US-A1- 2002 070 571
- US-A1- 2002 171 254
- US-A1- 2006 097 462
- US-A1- 2010 156 127

## Description

The invention relates to a gripper mechanism segment, comprising two bar-like links, a first and a second link holder which are connected together by four hinges to a pivotable parallelogram structure, whereas the four axis of pivoting are in parallel. The invention relates also to a gripper mechanism with two gripper mechanism segments.

It is known, that robots or other manipulators have to become equipped for some handling or manufacturing tasks with gripper mechanism or gripper tools, which comprise gripper fingers, which are similar to the fingers of a human hand. The belonging gripping process itself is comparable to a clamping of an object to be gripped inbetween at least two gripper fingers, which are moveable against each other. To enable such a clamping process, gripper mechanism with one moveable and one fixed, two moveables, two moveables and one fixed or three moveable gripper fingers are known for example. The movement ability of such a gripper finger is normally gained by at least two bars which are connected in series with a belonging hinge inbetween the bars.

For some kinds of objects to be gripped, such as block-, cylinder- or ball-shaped objects, it is advantageous for a comfortable and save handling, that the gripper fingers comprise flat, parallel gripping areas, which are moveable in parallel orientation against each other. To ensure, that two opponent gripping areas of two fingers of a gripper mechanism are always in parallel, gripper mechanism segments comprising a parallelogram structure are used. Such a parallelogram structure, consisting of four bars and four hinges, is pivotable around the four axis of pivoting, whereas opponent bars are always in parallel with the same orientation. Thus, a typical gripper finger comprises at least one parallelogram structure and a gripper bar with gripper area for clamping. The hinges usually are realized rotary with bearings.

*The patent document* US 2010/015127 A1 *discloses a gripper mechanism with two stiff pivotable parallelogram structures as gripper-fingers, wherein at their respective distal end a respective further pivotable parallelogram structure is foreseen, which is elastic*.

Disadvantageously within the state of the art is that - due to the bearings - the number of required parts for such a parallelogram structure is rather high. This increases the effort for constructing and manufacturing such a gripper mechanism segment on the one side and decreases the reliability of such a segment on the other side, since each part is a potential source for failures. Furthermore such a parallelogram structure is as stiff, that it is susceptible against tolerances of the dimensions of the objects to be gripped.

Based on this state of the art it is the objective of the invention to provide an improved gripper mechanism segment respectively an improved gripper mechanism with a reduced number of parts.

This problem is solved by a gripper mechanism segment of the aforementioned kind, which is characterized in that the hinges are carried out as elastic material plates.

This approach on one side reduces the required number of parts and on the other side reduces the effort for maintenance for a gripper mechanism segment respectively increases its reliability since bearings are avoided at all. Another positive effect of the invention consists in a slightly compliant behaviour of the gripper mechanism, which makes it more resistant against tolerances of the object to be gripped for example. A robot executes usually at least in part always the same movement respectively gripping sequence. Due to the compliant behaviour of the gripping mechanism segment respectively the gripping mechanism, tolerances of for example 1mm within the dimensions of intrinsically identical objects to be gripped can be compensated without changing anything within the programmed movement sequences of the robot. Of course, the flexibility of the elastic material plate has to be chosen such, that any lability of the gripper mechanism is avoided.

Preferably the elastic material is spring steel, composite plastic or NITINOL. These materials have are suitable to be formed in the desired thin plate-like shape, so that in they are rather easy to deform in one direction - which is required for their functionality as hinged. On the other side, such a plate like shape is rather stiff in the lateral direction, which is required to have a sufficient load capability of the gripper mechanism.

In a special embodiment the elastic material plates comprise at least two separate adjacent layers of the elastic material, which are connected at their end. Thus the flexibility of those plates is increased in the direction of pivoting.

In a variant of the invention each bar-like link comprises at least a middle section made from a stiff, mouldable material. A mouldable material can easily be formed in any required shape and provides a high flexibility to optimize the design of the bar-like links, whereas its stiffness after finishing the moulding process is required for the final stability of the parallelogram structure. Nevertheless, the word 'mouldable' has to be seen wide. Therefore it is also possible, to take any material which is easily to shape, such as a resin based material, another plastic, aluminium and so on.

In a further embodiment of the invention the elastic material plates, which are forming the hinges at both ends of a bar-like link, are built by a common elastic material plate comprising a middle section in-between both hinged ends. At least the middle section of the at least one bar-like link is moulded around the middle section of the elastic material plate. This enables a minimum manufacturing tolerance for the link-like bar with elastic material segments on both ends. In an advantageous manner the flexible middle part of the elastic material plate is surrounded by a mouldable material so that it is stiffened. Since an additional assembly of elastic material plates with the middle section of the bar-like link is avoided, the manufacturing process is simplified. But it is also possible to glue or clip a part with the desired shape on one or both sides of the middle section of the elastic material plates. The most important effect is that the middle section is stiffened.

Preferably the mouldable material is resin based since this is easily to shape in its fluid state and has good mechanical characteristics in its hardened state.

In a further embodiment of the invention the mechanical connection inbetween the elastic material plates and the belonging link holders is realized by a laterally angulated end of the elastic material plate which is aligned with a slotted connection hole of the link holder adapted thereon. Such connection is preferably carried out as plug connection, whereas the laterally angulated end of the elastic material plate is slidable into the belonging hole of the link holder. An advantage is the easy replace-ability of this component group for maintenance purposes.

In a preferred form of the invention a cylinder-like pin is moulded around each of the laterally angulated ends of the elastic material plates, whereas the cross sections of the pins and the cross sections of the slotted connection holes are adapted each to each other. Here it is not necessarily required to have angulated ends of the elastic material plate if the connection between the end of the elastic material plate and the pin is strong enough. This connection enables in an advantageous way a reduction of the tolerances inbetween pin and hole, so that a very exact and stable connection is gained. The moulded pin is preferably made from the same material than a moulded middle section. Thus it is possible to mould pins and middle section in the same manufacturing process.

In a variant of the invention an interaction pin is foreseen, which is orientated in parallel to the axis of pivoting and which is suitable, to transmit a mechanical movement on at least one of the bar-like links, so that the parallelogram structure is pivotable in a belonging position by moving the interaction pin. Such an interaction pin is preferably attached to one of the bar-like links within the parallelogram structure. Due to the preferably round shape of a pin it can be used as part of a hinge, which transmits a force from a further manipulator mechanism with bars, further hinges and/or a drive.

In a preferred form of the invention the interaction pin is located at about half the longitudinal length of the belonging bar-like links. The width of the bar-like links in their middle section is reduced relatively to the width at their hinges, so that a gap inbetween the two hinges is built. The position at half of the longitudinal length provides a lifting arm for a manipulator mechanism interacting with the pin, which is long enough to apply a sufficient force on the second link holder without overstressing the interaction pin.

The problem is also solved by a gripper mechanism of the aforementioned kind. Such a gripper mechanism comprises a base body, two gripper mechanism segments according to claim 7 or 8, which are connected thereto with their first link holders in that way, that the parallelogram structures are moveable in the same plane and obverse each to each other, whereas the belonging second link holders are connected with a finger bar each, so that an object inbetween the two finger bars can be gripped by pivoting the parallelogram structures against each other.

This solution allows taking advantage of the described gripper mechanism segment in a gripper mechanism. Since the parallelogram structures are moveable respectively pivotable in the same plane, all further gripper mechanism mounted on the second link holders such as the finger bars have always the same orientation each to each other. As described before, this is advantageous for the gripping process. Preferably opponent gripping areas are attached on the finger bars, which have for example a slightly elastic surface, so that the gripping is once more improved. Of course other embodiments with one or more fixed gripper finger respectively more than two moveable gripper fingers are thinkable. Also a series connection of more than one gripper segment mechanism is thinkable.

In another variant of the gripper mechanism a flat guiding element is foreseen, which is slidable vertically to the axis of pivoting along a line inbetween the two gripper mechanism segments, whereas the guiding element comprises two preferably symmetrical inclined guide notches which are foreseen to mechanically interact with the interaction pins in that way, that a sliding of the guide element in one direction opens the gripper mechanism and a sliding in the opposite direction closes the gripper mechanism.

Since the guide notches are inclined relatively to the movement direction of the flat guide element, its longitudinal movement is converted to a transversal movement of the interaction pins, which finally opens or closes the gripper fingers respectively the gripper jaw. A symmetrical arrangement of the guide notches has the effect, that transversal forces on both interaction pins are in opposite direction but of the same height, so that mainly a longitudinal force has to be applied on the flat guide element to open or close the gripper mechanism.

According to a preferred embodiment of the gripper mechanism, two opposite interaction pins are foreseen per gripper mechanism segment which interact with a flat guiding element each.

The opposite interaction pins are arranged preferably along the same line on both sides of the middle section of one of the two bar-like links in the direction of the axis of pivoting. Thus the mechanical force for opening and closing the gripper fingers is applied on both preferably symmetrical flat guiding elements, so that the mechanical strengthening per interaction pin respectively notch is reduced by a factor of two. Another aspect of this embodiment is that the bar-like links are supported so that a higher load capability of the compliant mechanism is gained.

In a special embodiment the upper and the lower support section respectively both flat guiding elements are pretensioned with respect to their contact sections to the compliant mechanism links. This allows for wear compensation and lowered requirements for manufacturing tolerances.

In a preferred embodiment of the invention the symmetrical inclined guide notches are curved in that way, that a longitudinal movement of the flat guide element in the open state of the gripper mechanism causes the same transversal movement of the gripper fingers than in the closed state.

This enables a constant movement of the gripper fingers while gripping an object in all states, which makes the gripping process more precise and controllable.

According to another variant of the invention one side of a guide notch is build by an elastic nose-piece, which is pressurized with a certain force in the direction of the middle of the guide notch, so that an abrasion of the edge of the guide notch is compensated by a belonging infinitesimal movement of the nose-piece.

Hence the time interval for maintenance is increased in an advantageous way. The nose piece itself might be realized by providing a second notch, which is preferably in parallel to the first notch - which interacts with the interaction pin -, so that a nose piece with a width of 1 mm for example is formed inbetween both notches. A suitable material for a flat guiding element is for example a metal with a slightly elastic characteristic. Thus a spring element, arranged within the second notch and applying a force on the nose piece in direction to the initial notch, will press the nose piece in that way, that an abrasion of the initial guide notch is compensated.

Following another embodiment of the invention, one side of the guide notch is build by a detachable element, whereas the connection between detachable element and flat guiding element opens, when the applied force exceeds a certain limit.

The detachable element is carried out principally as for example triangular or rectangular truncated section of the flat guide element, whereas on side of this section is forming one side of the guide notch. A stiff connection of the truncated section with the remaining flat guide element is foreseen, so that under normal gripping conditions the functionality of those connected elements is the same than of one complete flat guide element. In case of an unexpected over strengthening of the force applied on the interaction pin, the connection of the truncated section opens or brakes and any further damages for example of the interaction pin are avoided. Preferably the connection is realized for example with a spring-ball mechanism or similar, so that the truncated section is easily to re-insert.

Preferably the flat slidable guiding element is counterbored in the gaps of the bar-like links of the gripper mechanism segments. Hence the thickness of the gripper mechanism is reduced and such a gripper tool mounted on a robot does not reduce its freedom of movement in a disadvantageous way. On the other side the width of the hinges, which are carried out as elastic material plates, corresponds to the thickness of the gripper mechanism, so that a maximum stability of the parallelogram mechanism is gained for a given thickness.

Further advantageous embodiments of the invention are mentioned in the dependent claims.

The invention will now be further explained by means of an exemplary embodiment and with reference to the accompanying drawings, in which:
- Figure 1: shows a top view on a first exemplary gripper mechanism segment,
- Figure 2: shows a perspective view on a second exemplary gripper mechanism segment,
- Figure 3: shows a top view on a first exemplary gripper mechanism and
- Figure 4: shows a top view on a second exemplary gripper mechanism.

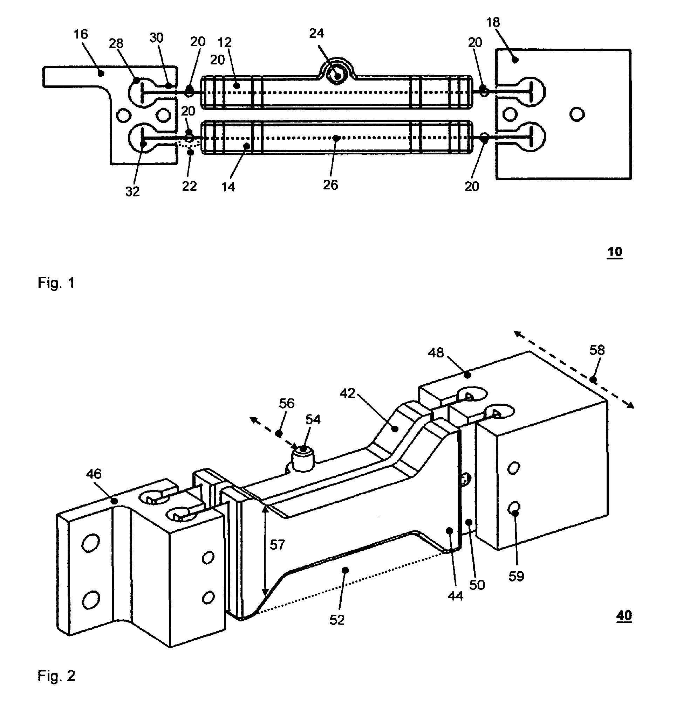

Fig. 1 shows a top view on a first exemplary gripper mechanism segment 10. Two parallel arranged bar-like links 12, 14, a first 16 and a second 18 link holder are arranged in a parallelogram structure, in particular in the special case of a rectangular structure. Four hinges carried out as elastic material plates are foreseen for a compliant connection inbetween those four elements, whereas one of them is marked with the reference sign 22 in this fig.. Four axis of pivoting - one around each elastic material plate 22 - are marked with the reference sign 20. Since each elastic material plate 22 has a longitudinal extension, whereas a pivoting is realized by a deformation along the longitudinal extension of the belonging part of the elastic material plate, the wording 'axis of pivoting' 20 is not exactly correct. Anyhow, due to reasons of easier description of the invention, the deformation of the elastic material plate shall assumed to take place around an axis of pivoting 20.

The elastic material plates 22 at both ends of the bar-like links 12, 14 are part of a common elastic material plate which extends in-between belonging connection holes 28 of the first 16 and the second 18 link holder. A common steel plate reduces the tolerances concerning the length of the bar-like links 12, 14, since no additional assembly process is required. A length of such a bar-like link amounts - dependent on the objects to be gripped, some few centimeters, whereas also length of 20cm and higher are thinkable. The middle section 26 of the common elastic material plate is surrounded in sections by a moldable material in block shaped form, for example a resin based material or plastics. This gives the medium section 26 of the elastic material plate the required stiffness for a stable parallelogram structure.

An interaction pin 24, which is embedded into the moldable material at about half of the longitudinal extension, is attached to the first bar-like link 12. The interaction pin 24 is preferably made from a metal so that significant abrasion is prevented. The ends 32 of the common elastic material plates are laterally angulated and adapted to the cross section of slotted 30 connection holes 28 of the link holders 16, 18, where they are connected with. For purposes of assembly and disassembly the ends of the elastic material plates are easily slidable into the silted 30 holes 28. To reduce the mechanical tolerances of such a connection, the laterally angulated ends 32 might be surrounded by a pin made preferably of the same moldable than the middle section. A laterally angulation is not necessarily required if the connection inbetween steel plate and molded pin is strong enough.

Fig. 2 shows a perspective view on a second exemplary gripper mechanism segment 40, which is very similar to the first gripper mechanism segment 10 shown in fig. 1. The bar like links are marked with the reference signs 42, 44, whereas a gap 52 is visible inbetween the two raised ends of the middle section. Thus the width 57 of the hinges 50, which are carried out as elastic material plates, is at the maximum in the area of their deformation. This provides a parallelogram structure with an increased stability. The gaps 52 on the bottom and on the top of the bar like links 42, 44 are foreseen to accommodate flat slidable guiding elements, when built in a complete gripper mechanism. Such - in this fig. not shown - flat guiding element will interact with an interaction pin 54 by transmitting a mechanical movement 56 on it. Since a first link holder 46 is assumed to be fixed, a movement 56 of the pin 54 causes a parallel movement 58 of a second link holder 48. A fixing hole is shown with the reference number 59. This enables fixing the elastic material plate within the connection hole of a link holder against up-down sliding movements by inserting a fixing bolt.

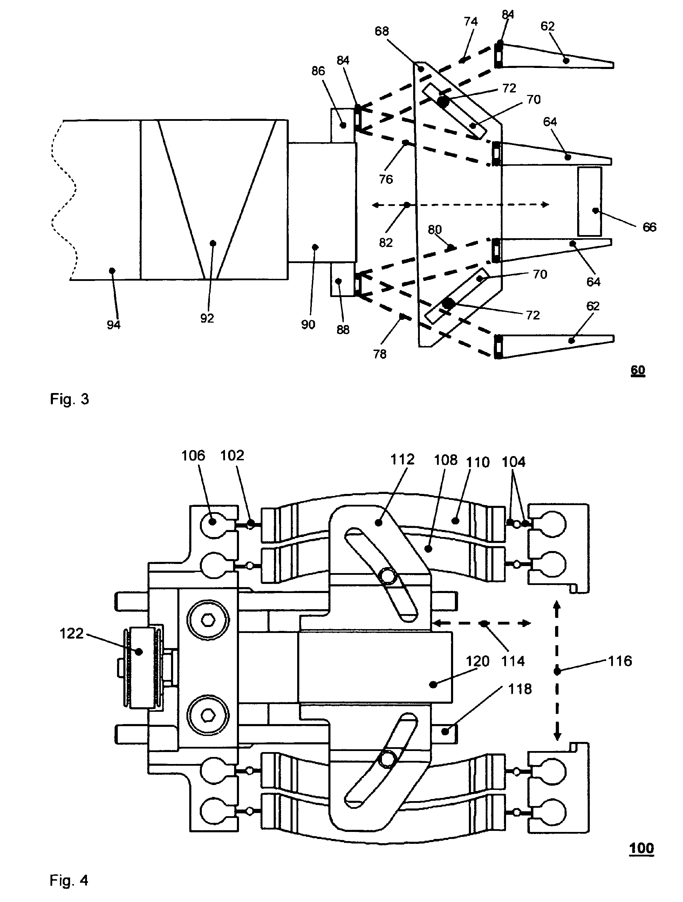

Fig. 3 shows a top view 60 on a first exemplary gripper mechanism. A schematic indicated robot arm 94 with a hollow wrist 92 - providing three degrees of freedom in movement - is connected with a base body 90 of a gripper mechanism. A typical robot provides 6 or seven degrees of freedom in movement and is able to move the tip of its arm, and therewith a gripper mechanism mounted thereon, in any position in any orientation within its working range, which amounts for example 2m around its rotary base.

Both-sided to the base body two gripper fingers are attached. Each gripper finger comprises one pivotable gripper mechanism segment 74, 76, 80, 78, whereas in this fig. the reference numbers 74, 78 show the belonging segments in an open position and the reference numbers 76, 80 the same segments in an alternate, narrow gripping position. The gripper fingers are mounted on the base body 90 using first link holders 86, 88, whereas the second link holders are not separately shown, since they are part of finger bars 62, 64. In the gripping position the gripper bars 64 have an object 66 clamped inbetween them, whereas the reference number 62 shows the same gripper bars in the open position of the gripper mechanism. A flat slidable guiding element 68 with two symmetrical inclined guiding notches 70 is moveable along a line 82. Due to a mechanical interaction between the notches 70 with interaction pins 72 the movement of the guide element 68 causes an opening or closing of the gripper mechanism.

Fig. 4 shows a top view on a second exemplary gripper mechanism 100 more in detail than the schematic illustration in fig. 3, whereas the gripper bars for clamping are not shown in fig. 4. A total of eight hinges carried out as elastic material plates 104 are foreseen for two parallelogram structures, which are all subject to deformation along the longitudinal extension of the belonging part of the elastic material plate. Such a deformation is approximately comparable with a pivoting around the eight axis 102. The ends of the elastic material plates are embedded in cylinder-like pins 106 moulded around them. Thus a tolerance free connection of the elastic material plates respectively the bar-like links 104 with the link holders is gained. The four bar-like links 104 are slightly curve shaped to gain some space inbetween the two gripper mechanism segments for an electrical motor drive 120, which is foreseen to move a flat guiding plate 112 the in direction 114 by transmitting its rotation via a belt drive 122 to a spindelshaft. Dependent on the movement of the flat guiding plate 112 the gripper mechanism opens respectively closes in direction 116. The symmetrical inclined notches of the flat guide plate, which interact with belonging interaction pins of the gripper mechanism, are curve shaped, so that that a longitudinal movement of the flat guide element 112 in the open state of the gripper mechanism causes a longer transversal movement of the gripper fingers than in the closed state.

### List of reference signs

- 10: top view on a first exemplary gripper mechanism segment
- 12: bar-like link
- 14: bar-like link
- 16: first link holder
- 18: second link holder
- 20: axis of pivoting
- 22: hinge carried out as elastic material plate
- 24: interaction pin
- 26: middle section of common elastic material plate
- 28: connection hole of link holder
- 30: slot of connection hole of link holder
- 32: laterally angulated end of the elastic material plate
- 40: perspective view on a second exemplary gripper mechanism segment
- 42: bar-like link
- 44: bar-like link
- 46: first link holder
- 48: second link holder
- 50: hinge carried out a elastic material plate
- 52: gap in middle section of a bar-like link with reduced width
- 54: interaction pin
- 56: movement direction of interaction pin
- 57: width of bar-like link
- 58: movement direction of second link holder
- 59: fixing hole
- 60: top view on a first exemplary gripper mechanism
- 62: finger bar for gripping in open position
- 64: finger bar for gripping in gripping position
- 66: object to be gripped
- 68: slidable flat guiding element
- 70: symmetrical inclined guiding notch
- 72: interaction pin
- 74: first gripper mechanism segment in open position
- 76: first gripper mechanism segment in gripping position
- 78: second gripper mechanism segment in open position
- 80: second gripper mechanism segment in gripping position
- 82: moving line of the flat guide element
- 84: axis of pivoting
- 86: first link holder of first gripper mechanism
- 88: first link holder of second gripper mechanism
- 90: base body of gripper mechanism
- 92: hollow wrist of robot
- 94: robot arm
- 100: top view on a second exemplary gripper mechanism
- 102: axis of pivoting
- 104: hinge carried out as elastic material plate
- 106: cylinder-like pin moulded around angulated end of elastic material plate
- 108: bar-like link
- 110: bar-like link
- 112: slidable flat guiding element
- 114: movement direction of guiding element
- 116: simplified movement direction of second link holders
- 118: guiding rod for slidable guiding element
- 120: electrical motor drive for slidable flat guiding element
- 122: belt drive to spindle shaft

## Claims

1. Gripper mechanism segment (10, 40, 74, 76, 78, 80), comprising two bar-like links (12, 14, 42, 44, 108, 110), a first (16, 46, 86, 88) and a second (18, 48) link holder which are connected together by four hinges to a *bearing-free* pivotable parallelogram structure, wherein the four axis of pivoting (20, 84, 102) are in parallel and the hinges are carried out as elastic material plates (22, 104),
**characterized in that**
*an interaction pin (24, 54,* 72) *is foreseen, which is orientated in parallel to the axis of pivoting (20, 84, 102) and which is suitable, to transmit a mechanical mouvement (56) on at least one of the bar-like links (92, 14, 42, 44, 108, 110) so that the parallelogram structure is pivotable (58) in a belonging position by moving the Interaction pin (24, 54, 72).*

2. Gripper mechanism according to claim 1, **characterized in that** the elastic material is spring steel, composite plastic or NITINOL.

3. Gripper mechanism according to claim 1 or 2, **characterized in that** the elastic material plates comprise at least two separate adjacent layers of the elastic material, which are connected at their end.

4. Gripper mechanism segment according to claim 1 - 3, **characterized in that** each bar-like link (12, 14, 42, 44, 108, 110) comprises at least a middle section made from a stiff, mouldable material.

5. Gripper mechanism segment according to claim 4, **characterized in that** the elastic material plates (22, 104) forming the hinges at both ends of a bar-like link (12, 14, 42, 44, 108, 110) are built by a common elastic material plate comprising a middle section (26) In-between both hinged ends, wherein at least the middle section of the at least one bar-like link is moulded around the middle section (26) of the elastic material plate.

6. Gripper mechanism segment according to claim 4 or 5, **characterized in that** the mouldable material is resin based.

7. Gripper mechanism segment according to any of the previous claims, **characterized in that** the mechanical connection inbetween the elastic material plates (22, 104) and the belonging link holders (16, 18, 46, 48, 86, 88) is realized by a laterally angulated end (32) of the elastic material plate which is aligned with a slotted (30) connection hole (28) of the link holder (16, 18, 46, 48, 86, 88) adapted thereon.

8. Gripper mechanism segment according to claim 7, **characterized in that** a cylinder-like pin (106) is moulded around each of the laterally angulated ends (32) of the elastic material plates (22, 104), wherein the cross sections of the pins (106) and the cross sections of the slotted (30) connection holes (28) are adapted each to each other.

9. Gripper mechanism segment according to *any of the previous* claims, **characterized in that** the interaction pin (24, 54, 72) is located at about half the longitudinal length of the belonging bar-like links (12, 14, 42, 44, 108, 110) and that the width (57) of the bar-like links (12, 14, 42, 44, 108, 110) in their middle section is reduced relatively to the width at the hinges (22, 104), so that a gap (52) inbetween the two hinges is built.

10. Gripper mechanism, comprising a base body (90), two gripper mechanism segments (10, 40) according to claim 8 or 9, which are connected thereto with their first link holders (16, 46, 86, 88) in that way, that the parallelogram structures are moveable in the same plane and obverse each to each other, wherein the belonging second link holders (18, 48) are connected with a finger bar (62, 64) each, so that an object (66) inbetween the two finger bars (62, 64) can be gripped by pivoting the parallelogram structures against each other.

11. Gripper mechanism according to claim 10, **characterized in that** a flat guiding element (68, 112) is foreseen, which is slidable (114) vertically to the axis of pivoting (20, 84, 102) along a line (82) inbetween the two gripper mechanism segments (74, 76, 78, 80), wherein the guiding element (68, 112) comprises two preferably symmetrical inclined guide notches (72) which are foreseen to mechanically interact with the interaction pins (24, 54, 72) **in that** way, that a sliding of the guide element (68, 112) in one direction (114) opens (116) the gripper mechanism and a sliding in the opposite direction closes the gripper mechanism.

12. Gripper mechanism according to claim *11*, **characterized in that** two opposite interaction pins (24, 54, 72) are foreseen per gripper mechanism segment (10, 40, 74, 76, 78, 80) which interact with a flat guiding element (68, 112) each.

13. Gripper mechanism according to claim *11 or 12,* **characterized in that** the symmetrical inclined guide notches (72) are curved **in that** way, that a longitudinal movement of the flat guide element in the open state of the gripper mechanism causes the same transversal movement of the gripper fingers than in the closed state.

14. Gripper mechanism according to one of the claims *11 - 13*, **characterized in that** one side of a guide notch is build by an elastic nose-piece, which is pressurized with a certain force in the direction of the middle of the guide notch, so that an abrasion of the edge of the guide notch is compensated by a belonging movement of the nose-piece.

15. Gripper mechanism according to one of the claims *11 - 14*, **characterized in that** one side of the guide notch is build by a detachable element, whereis the connection between detachable element and flat guiding element opens, when the applied force exceeds a certain limit.

16. Gripper mechanism according to one of the claims *11 - 15*, **characterized in that** the flat slidable guiding element (68, 112) is counterbored in the gaps (52) of the bar-like links (12, 14, 42, 44, 108, 110) of the gripper mechanism segments (10, 40, 74, 76, 78, 80).

## Patentansprüche

1. Greifmechanismus-Segment (10, 40, 74, 76, 78, 80), umfassend zwei stangenartige Verbindungen (12, 14, 42, 44, 108, 110), eine erste (16, 46, 86, 38) und eine zweite (18, 48) Verbindungshalterung, die über vier Scharniere zu einer lagerfreien, drehbaren Parallelogrammstruktur verbunden sind, wobei die vier Drehachsen (20, 84, 102) parallel sind und die Scharniere als elastische Materialplatten (22, 104) ausgeführt sind;
**dadurch gekennzeichnet, dass** ein Interaktionsstift (24, 54, 72) vorgesehen ist, der parallel zu der Drehachse (20, 84, 102) ausgerichtet ist und der geeignet ist, um eine mechanische Bewegung (56) auf mindestens eine der stangenartigen Verbindungen (12, 14, 42, 44, 108, 110) zu übertragen, sodass die Parallelogrammstruktur in eine zugehörige Richtung durch Bewegen des Interaktionsstifts (24, 54, 72) drehbar (58) ist.

2. Greifmechanismus-Segment nach Anspruch 1, **dadurch gekennzeichnet, dass** das elastische Material ein Federstahl, ein Verbundkunststoff oder NITINOL ist.

3. Greifmechanismus-Segment nach Anspruch 1 oder 2, **dadurch gekennzeichnet, dass** die elastischen Materialplatten mindestens zwei separate benachbarte Schichten aus dem elastischen Material umfassen, die an deren Ende verbunden sind.

4. Greifmechanismus-Segment nach einem der Ansprüche 1 bis 3, **dadurch gekennzeichnet, dass** jede stangenartige Verbindung (12, 14, 42, 44, 108, 110) mindestens einen Mittelabschnitt umfasst, der aus einem steifen, formbaren Material hergestellt ist.

5. Greifmechanismus-Segment nach Anspruch 4, **dadurch gekennzeichnet**, das die elastischen Materialplatten (22, 104), welche die Scharniere an beiden Enden der stangenartigen Verbindung (12, 14, 42, 44, 108, 110) bilden, von einer herkömmlichen elastischen Materialplatte gebildet werden, die einen Mittelabschnitt (26) zwischen beiden Scharnierenden umfasst, wobei mindestens der Mittelabschnitt der mindestens einen stangenartigen Verbindung um den Mittelabschnitt (26) der elastischen Materialplatte geformt ist.

6. Greifmechanismus-Segment nach einem der Ansprüche 4 oder 5, **dadurch gekennzeichnet, dass** das formbare Material auf Harzbasis hergestellt ist.

7. Greifmechanismus-Segment nach einem der vorherigen Ansprüche, **dadurch gekennzeichnet, dass** die mechanische Verbindung zwischen den elastischen Materialplatten (22, 104) und den zugehörigen Verbindungshalterungen (16, 18, 46, 48, 86, 88) von einem seitlich angewinkelten Ende (32) der elastischen Materialplatte ausgeführt ist, die mit einem geschlitzten (30) Verbindungsloch (28) der Verbindungshalterung (16, 18, 46, 48, 86, 88) ausgerichtet ist, das darauf angepasst ist.

8. Greifmechanismus-Segment nach Anspruch 7, **dadurch gekennzeichnet, dass** ein zylinderartiger Stift (106) um jedes der seitlich angewinkelten Enden (32) der elastischen Materialplatten (22, 104) geformt ist, wobei die Querschnitte der Stifte (106) und die Querschnitte der geschlitzten (30) Verbindungslöcher (28) aufeinander angepasst sind.

9. Greifmechanismus-Segment nach einem der vorherigen Ansprüche, **dadurch gekennzeichnet, dass** der Interaktionsstift (24, 54, 72) auf etwa halber Länge der zugehörigen stangenartigen Verbindungen (12, 14, 42, 44, 108, 110) angeordnet ist und dadurch, dass die Breite (57) der stangenartigen Verbindungen (12, 14, 42, 44, 108, 110) in ihrem Mittelabschnitt in Bezug auf die Breite an den Scharnieren (22, 104) verringert ist, sodass ein Spalt (52) zwischen den zwei Scharnieren gebildet wird.

10. Greifmechanismus, umfassend einen Grundkörper (90), zwei Greifmechanismus-Segmente (10, 40) nach Anspruch 8 oder 9, die damit über ihre ersten Verbindungshalterungen (16, 46, 86, 88) auf solche Weise verbunden sind, dass die Parallelogrammstrukturen auf der gleichen Ebene beweglich sind und mit ihrer Vorderseite zueinander zeigen, wobei die zugehörigen zweiten Verbindungshalterungen (18, 48) jeweils mit einer Fingerstange (62, 64) verbunden sind, sodass ein Objekt (66) zwischen den zwei Fingerstangen (62, 64) durch Drehen der Parallelogrammstrukturen zueinander ergriffen werden kann.

11. Greifmechanismus nach Anspruch 10, **dadurch gekennzeichnet, dass** ein flaches Führungselement (68, 112) vorgesehen ist, das vertikal zu der Drehachse (20, 84, 102) entlang einer Linie (82) zwischen zwei Greifmechanismus-Segmenten (74, 76, 78, 80) verschiebbar (114) ist, wobei das Führungselement (68, 112) zwei vorzugsweise symmetrisch geneigte Führungsnuten (70) umfasst, die zum mechanischen Interagieren mit den Interaktionsstiften (24, 54, 72) auf solche Weise vorgesehen sind, dass ein Verschieben des Führungselements (68, 112) in eine Richtung (114) den Greifmechanismus öffnet (116) und ein Verschieben in die Gegenrichtung den Greifmechanismus schließt.

12. Greifmechanismus nach Anspruch 11, **dadurch gekennzeichnet, dass** zwei gegenüberliegende Interaktionsstifte (24, 54, 72) pro Greifmechanismus-Segment (10, 40, 74, 76, 78, 80) vorgesehen sind, die jeweils mit einem flachen Führungselement (68, 112) interagieren.

13. Greifmechanismus nach einem der Ansprüche 11 oder 12, **dadurch gekennzeichnet, dass** die symmetrisch geneigten Führungsnuten (70) auf solche Weise gekrümmt sind, dass eine Längsbewegung des flachen Führungselements im offenen Zustand des Greifmechanismus die gleiche Querbewegung der Greiffinger wie im geschlossenen Zustand bewirkt.

14. Greifmechanismus nach einem der Ansprüche 11 bis 13, **dadurch gekennzeichnet, dass** eine Seite einer Führungsnut von einem elastischen Nasenstück gebildet wird, das mit einer bestimmten Kraft in die Richtung der Mitte der Führungsnut gedrückt wird, sodass eine Reibung des Randes der Führungsnut von einer zugehörigen Bewegung des Nasenstücks kompensiert wird.

15. Greifmechanismus nach einem der Ansprüche 11 bis 14, **dadurch gekennzeichnet, dass** in einer Seite der Führungsnut ein lösbares Element ausgebildet ist, wobei die Verbindung zwischen dem lösbaren Element und dem flachen Führungselement öffnet, wenn die angelegte Kraft einen bestimmten Grenzwert überschreitet.

16. Greifmechanismus nach einem der Ansprüche 11 bis 15, **dadurch gekennzeichnet, dass** das flache, verschiebbare Führungselement (68, 112) in Spalten (52) der stangenartigen Verbindungen (12, 14, 42, 44, 108, 110) der Greifmechanismus-Segmente (10, 40, 74, 76, 78, 80) eingesenkt ist.

## Revendications

1. Segment de mécanisme de préhension (10, 40, 74, 76, 78, 80), comprenant deux organes de liaison en forme de barres (12, 14, 42, 44, 108, 110), un premier (16, 46, 86, 88) et un second (18, 48) support d'organe de liaison qui sont raccordés ensemble par quatre articulations de façon à former une structure en forme de parallélogramme pivotante dépourvue de palier, les quatre axes de pivotement (20, 84, 102) étant parallèles et les articulations étant réalisées sous la forme de plaques en matériau élastique (22, 104), **caractérisé en ce que**
une goupille d'interaction (24, 54, 72) est prévue, celle-ci étant orientée de manière parallèle à l'axe de pivotement (20, 84, 102) et étant appropriée pour transmettre un mouvement mécanique (56) sur au moins l'un des organes de liaison en forme de barres (12, 14, 42, 44, 108, 110) de telle sorte que la structure en forme de parallélogramme puisse pivoter (58) dans une position correspondante par le biais d'un déplacement de la goupille d'interaction (24, 54, 72).

2. Segment de mécanisme de préhension selon la revendication 1, **caractérisé en ce que** le matériau élastique est un acier à ressorts, un plastique composite ou du NITINOL.

3. Segment de mécanisme de préhension selon la revendication 1 ou 2, **caractérisé en ce que** les plaques en matériau élastique comprennent au moins deux couches adjacentes séparées du matériau élastique, qui sont raccordées au niveau de leur extrémité.

4. Segment de mécanisme de préhension selon les revendications 1 à 3, **caractérisé en ce que** chaque organe de liaison en forme de barre (12, 14, 42, 44, 108, 110) comprend au moins une section médiane constituée d'un matériau rigide apte au moulage.

5. Segment de mécanisme de préhension selon la revendication 4, **caractérisé en ce que** les plaques en matériau élastique (22, 104) formant les articulations au niveau des deux extrémités d'un organe de liaison en forme de barre (12, 14, 42, 44, 108, 110) sont réalisées à partir d'une seule plaque en matériau élastique comprenant une section médiane (26) située entre les deux extrémités articulées, au moins la section médiane du ou des organes de liaison en forme de barres étant moulée autour de la section médiane (26) de la plaque en matériau élastique.

6. Segment de mécanisme de préhension selon la revendication 4 ou 5, **caractérisé en ce que** le matériau apte au moulage est à base de résine.

7. Segment de mécanisme de préhension selon l'une quelconque des revendications précédentes, **caractérisé en ce que** le raccordement mécanique entre les plaques en matériau élastique (22, 104) et les supports d'organe de liaison correspondants (16, 18, 46, 48, 86, 88) est réalisé par le biais d'une extrémité (32) formant un angle dans le sens latéral de la plaque en matériau élastique qui est alignée avec un trou de raccordement (28) à fente (30) du support d'organe de liaison (16, 18, 46, 48, 86, 88) ajusté sur celle-ci.

8. Segment de mécanisme de préhension selon la revendication 7, **caractérisé en ce qu'**une goupille (106) de forme cylindrique est moulée autour de chacune des extrémités (32) formant un angle dans le sens latéral des plaques en matériau élastique (22, 104), les sections transversales des goupilles (106) et les sections transversales des trous de raccordement (28) à fente (30) étant respectivement adaptées les unes aux autres.

9. Segment de mécanisme de préhension selon l'une quelconque des revendications précédentes, **caractérisé en ce que** la goupille d'interaction (24, 54, 72) est située environ à mi-longueur dans le sens longitudinal des organes de liaison en forme de barres correspondants (12, 14, 42, 44, 108, 110) et **en ce que** la largeur (57) des organes de liaison en forme de barres (12, 14, 42, 44, 108, 110) au niveau de leur section médiane est réduite par rapport à la largeur au niveau des articulations (22, 104), de telle sorte qu'un espace (52) est formé entre les deux articulations.

10. Mécanisme de préhension, comprenant un corps de base (90), deux segments de mécanisme de préhension (10, 40) selon la revendication 8 ou 9, qui sont raccordés à celui-ci par le biais de leurs premiers supports d'organe de liaison (16, 46, 86, 88) de telle sorte que les structures en forme de parallélogrammes soient mobiles dans le même plan et opposées l'une par rapport à l'autre, les seconds supports d'organe de liaison (18, 48) correspondants étant chacun raccordés à une barre formant doigt (62, 64), de telle sorte qu'un objet (66) entre les deux barres formant doigts (62, 64) puisse être saisi en pivotant les structures en forme de parallélogrammes l'une vers l'autre.

11. Mécanisme de préhension selon la revendication 10, **caractérisé en ce qu'**un élément de guidage plat (68, 112) est prévu, celui-ci pouvant coulisser (114) verticalement par rapport à l'axe de pivotement (20, 84, 102) le long d'une ligne (82) entre les deux segments de mécanisme de préhension (74, 76, 78, 80), l'élément de guidage (68, 112) comprenant deux encoches formant guides inclinées de préférence symétriques (70) qui sont prévues pour interagir mécaniquement avec les goupilles d'interaction (24, 54, 72) de telle sorte qu'un coulissement de l'élément de guidage (68, 112) dans une direction (114) ouvre (116) le mécanisme de préhension et qu'un coulissement dans la direction opposée ferme le mécanisme de préhension.

12. Mécanisme de préhension selon la revendication 11, **caractérisé en ce que** deux goupilles d'interaction opposées (24, 54, 72) sont prévues pour chaque segment de mécanisme de préhension (10, 40, 74, 76, 78, 80), celles-ci interagissant chacune avec un élément de guidage plat (68, 112).

13. Mécanisme de préhension selon la revendication 11 ou 12, **caractérisé en ce que** les encoches formant guides inclinées symétriques (70) sont incurvées de telle sorte qu'un mouvement longitudinal de l'élément de guidage plat dans l'état ouvert du mécanisme de préhension provoque le même mouvement transversal des doigts de préhension que dans l'état fermé.

14. Mécanisme de préhension selon l'une des revendications 11 à 13, **caractérisé en ce qu'**un côté d'une encoche formant guide est formé par un pont élastique, qui est sollicité par pression avec une certaine force en direction de la partie médiane de l'encoche formant guide, de telle sorte qu'une abrasion du bord de l'encoche formant guide soit compensée par un mouvement correspondant du pont.

15. Mécanisme de préhension selon l'une des revendications 11 à 14, **caractérisé en ce qu'**un côté de l'encoche formant guide est formé par un élément détachable, le raccordement entre l'élément détachable et l'élément de guidage plat se rompant lorsque la force appliquée dépasse une certaine limite.

16. Mécanisme de préhension selon l'une des revendications 11 à 15, **caractérisé en ce que** l'élément de guidage plat coulissant (68, 112) est façonné de manière à s'ajuster dans les espaces (52) des organes de liaison en forme de barres (12, 14, 42, 44, 108, 110) des segments de mécanisme de préhension (10, 40, 74, 76, 78, 80).
